# EUROPEAN PATENT SPECIFICATION

(11) **EP 2 849 442 B1**
(45) Date of publication and mention of the grant of the patent: **29.03.2017**
(21) Application number: 13184508.3
(22) Date of filing: 16.09.2013
(51) Int. Cl.: H04N 9/31, G09F 19/18, G06F 3/01

(54) **Gesture-controlled rear-projection system**
Gestengesteuertes Rückprojektionssystem
Système de projection arrière commandée par des gestes

(43) Date of publication of application: 18.03.2015
(73) Proprietor: ameria GmbH, 69120 Heidelberg (DE)
(72) Inventor: Albrecht METTER, 69120 Heidelberg (DE); Christian ENßLEN, 69120 Heidelberg (DE); Artem SAVOTIN, 69120 Heidelberg (DE)
(74) Representative: Hess, Peter K. G.

(56) References cited:
- EP-A1- 1 613 071
- EP-A2- 1 227 677
- WO-A2-2008/012716
- US-A- 4 526 337
- US-A1- 2001 012 001
- US-A1- 2001 020 933
- US-A1- 2005 034 468
- US-A1- 2009 021 702
- US-A1- 2012 319 997
- Screen Solutions Int.: "Interactive Window Displays", Promotional video on Vimeo , 18 February 2013 (2013-02-18), XP055143908, Retrieved from the Internet: URL:http://vimeo.com/59880757 [retrieved on 2014-10-01]
- Matrox: "Simplify Seamless Multi-Projector Installations", Technology paper , 1 October 2011 (2011-10-01), XP055143922, Retrieved from the Internet: URL:https://web.archive.org/web/2013070201 1109/http://www.matrox.com/graphics/media/ pdf/products/extio/mura_mpx/m_series/power desk/edge_overlap/white_paper/en_edge_over lap_white_paper.pdf [retrieved on 2014-10-01]

## Description

### 1. Technical field

The present invention relates generally to rear-projection systems, and more specifically to an interactive gesture-controlled rear-projection system for use e.g. in connection with a shop window.

### 2. The prior art

It has become more and more popular to enrich shopping windows, trade show booths, reception areas, point of sales (POS) and generally any location where information is provided to a user, with the help of digital technology.

For example, some companies have started to employ interactive retail systems in their stores using a combination of mobile phones and touch screens in shopping windows to allow customers to purchase goods. After customers have established a WiFi connection with the system they can put goods in their shopping cart via drag and drop. Other systems use conventional television sets / LCD screens to create a combination of virtual mirror and window shopping which gives the customer the opportunity to purchase goods. The customer can share and print a displayed image or use a mobile application to share information with their mobile device.

Prodisplay (http://www.prodisplay.com/) is a system which uses rear projection and a projection foil to make shopping windows interactive. A projector is attached behind the shopping window on the ceiling. By means of a circuit board on the window the projected area becomes a touch screen. The product Magic Mirror (http://www.magicmirror.me/) uses Microsoft Kinect (http://en.wikipedia.org/wiki/Kinect), a digital camera, an LCD TV, touch screens and CPUs to create a one-component digital mirror. The customer is enabled to control the mirror via a tablet computer or gesture control to view products (e.g. clothes) and to take a 360° photo thereof. The photo can be shared over Facebook by using its touch screen to type in the credentials. Fitnect (http://www.fitnect.hu/) uses Microsoft's Kinect and three-dimensional product models to create an interactive fitting room. The clothes which are virtually tried on by the customer are put over the customer's image in the mirror. Fitnect offers this solution in landscape and portrait mode with a cloud based database for product information.

However, the above systems suffer from a number of drawbacks. For example, systems using touch screens, such as tablet computers, LCD screens or TV sets, considerably increase the overall cost of the system due to the expensive hardware and also bear safety risks, since the screens might be easily stolen. Further, public touch screens result in a germ pool and are very unhygienic. Moreover, systems using touch screens, LCD screens or TV sets to present information have a very limited display size which is constrained by the employed screen. Also, using such screens it is not possible to overlay real-life objects with digital media, as might be desired e.g. in shopping window scenarios.

On the other hand, prior art systems using rear-projection to achieve a near-life-size projection area require a considerable distance between the projector and the projection area, so that it becomes difficult or even impossible to use such systems in scenarios where space is limited, such as shopping windows, trade show booths, or the like. Furthermore, these systems generally require a very powerful and thus costly projector to provide a reasonably sized and sufficiently bright image for the respective use case.

U.S. patent application publication US 2012/0319997 A1 relates to multi-user interactions with projection-based display walls. The system includes a three-by-three array of projectors so that users can perform gestures that are projected to a wall.

International patent application publication WO 2008/012716 A2 relates to private screens self-distributing along a shop window where users look at products placed behind a shop window. A private screen is provided for each user to display information, wherein the private screens may be projected into the shop window using rear-projection. To this end, an array of projectors may be used. The size and position of the private screens may be adjusted using gestures.

US 2001/0020933 A1 and US 2001/0012001 A1 provide further technological background on interactive displays.

Furthermore, "Interactive Window Displays on Vimeo" (http://vimeo.com/59880757) discloses a rear-projection system with two ceiling-mounted projectors.

It is therefore the technical problem underlying the present invention to provide an interactive information presentation system which at least partly overcomes the above explained disadvantages of the prior art.

### 3. Summary of the invention

This problem is according to one aspect of the invention solved by a gesture-controlled rear-projection system as defined in claim 1.

Accordingly, the embodiment defines a rear-projection system comprising two or more projection means, preferably video projectors. In a preferred embodiment, any type of conventional video projector might be used, such as CRT, LCD, LED projectors, or the like. Each of the projection means projects an image (comprising static and/or moving images, video, or the like) onto a transparent surface to which a rear-projection foil is attached (in particular a shop window). This way, digital data is projected onto a backside of the transparent surface and can be viewed from a front side thereof.

An image processing module, which is implemented in software, adjusts the individual images projected by the projection means, such that a composite image is created on the transparent surface. A user (or a plurality of users) viewing the composite image can then interact therewith using gestures.

To this end, the system comprises a gesture control means which is able to capture motions of one or more users (e.g. by means of a camera and/or a depth sensor) and to interpret these motions in order to detect commands, e.g. for scrolling through a displayed list of information, turning, selecting and/or moving virtual objects projected on the transparent surface, or the like.

Using gesture control, the system can be used without the users touching the transparent surface serving as projection screen, which results in a convenient and most importantly very hygienic use of the system. Moreover, using two or more projection means has the advantage that the projection area creatable on the transparent surface is considerably increased without impacting the brightness or increasing the required space, as compared to the prior art systems using only one projector. This way, it becomes possible to provide projections of life-size objects, in particular virtual representations of a human being with which the users can interact. At the same time, the necessary distance between the projection means and the transparent surface serving as projection area can be kept at a minimum, and is considerably decreased as compared to the prior art systems using a single projector. As a result, the system of the present invention can be used in scenarios with very limited space capabilities, such as shopping windows, trade show booths, or the like.

According to one aspect of the invention, the images projected by the two projection means overlap, and the image processing module is adapted for creating a transparent-to-black gradient in the overlapping portions of the images, so that the images can be blended over each other to create the composite image. Accordingly, the individual images projected by the two or more projection means overlap to some extend to avoid gaps in the overall composite image and the image processing module of the invention is adapted for synchronizing the overlapping area, so that a consistent composite image is created. This is achieved in that each individual image is in the overlapping portion overlaid with a gradient from transparent to black (note that black is the color which leads the projector to display no image data on the projection surface).

Furthermore, by help of a projector alignment module the two projection means can be aligned and/or oriented to reduce the necessity of adjustments on the software and signal side of the images. The image processing module then adjusts the overlapping parts of the two or more images in a manner so that the overlapping area is still sharp and homogeneously bright. This results in a composite image which appears to the user as if it was projected by a single projector.

In another aspect, the system comprises means to visually adjust the size, brightness and/or color of the gradients of the images to improve the appearance of the composite image.

Furthermore, the system according to the invention may further comprise at least one holding means for flexibly holding at least one of the two projection means to allow adjusting the projecting direction of the projection means and/or the dimensions of the composite image. Accordingly, a projection means mounted on such a holding means can be flexibly adjusted. A projector alignment module may be provided to support positioning and/or orientation of the projection means held by the holding means.

The two projection means of the system of the invention are arranged in a vertical arrangement to provide a composite image in portrait format, the dimensions of which are preferably suitable for displaying an image of an essentially life-size human being. Such an arrangement is particularly useful in scenarios where a virtual human is to be presented to the user, e.g. a virtual promoter in a shopping window, a virtual receptionist in a reception area or trade show booth, or even a virtual representation of the user.

Additionally or alternatively, the two projection means can be arranged such that the required distance between the two projection means and the transparent surface is reduced to a minimum. Accordingly, said distance can be significantly smaller than the projection height, which is particularly suitable for portrait orientation application scenarios with limited space.

Embodiments of the system of the invention may also comprise a system health monitoring module adapted for monitoring and/or logging the status of the system and/or its components and for sending status information to a server. This way, it becomes possible to have a precise and timely overview of the system's health status in order to take corrective measures in a timely fashion in case of failures.

In yet another aspect of the invention, the system further comprises an information processing system, such as a laptop computer, for executing a gesture-controlled application to be presented to the one or more users. By using conventional off-the-shelf computer hardware as core processing unit of the system of the invention, the overall costs of the system are minimized. At the same time, it becomes possible to install and execute any type of application depending on the specific use case. Alternatively, also individually developed hardware may be used as an information processing system of the invention.

In a further aspect of the invention, at least one dynamically created machine-readable label is displayed on the composite image which is usable to hand over an interaction process to a, preferably mobile, device. Accordingly, the composite image not only displays information understandable by the human users, but also one or more machine-readable labels which can be read by a device, such as a smart phone or tablet computer. This way, an interaction process taking place between the system and the user, e.g. a window shopping application, can be handed over to the mobile device, so that the user may e.g. perform a checkout process on his/her mobile device in order to purchase a product.

In one exemplary embodiment, the at least one machine-readable label is a Quick Response, QR, code and the application allows the one or more users to perform window shopping. Accordingly, a window shopping application is provided in this embodiment, which may present an image comprising a virtual human presenter and any number of virtual products with which the user can interact and which he/she can purchase using the QR capabilities of his/her mobile device.

In addition or alternatively, a network interface may be comprised in the system, in particular a wireless interface, for allowing administrating the system from a remote location, such as a server, and/or from a mobile device, such as a mobile phone and/or tablet computer and/or remote control. This way, the system of the invention can be administered and controlled locally and/or remotely. For example, the system may be administered and configured on a server which is connected to the system (or even to multiple systems of the invention) via Internet. Another example is a remote control operated in sight distance of the (maybe difficult to reach) system, e.g. using a dedicated remote control or a smart phone or other suitable mobile device.

Furthermore, the system may further comprise a control unit for displaying the status of the system and for selecting a power state and/or sound settings of the system. The control unit may be provided in the form of a panel with suitable user interface elements, such as buttons, or the like. In addition or alternatively, the functionalities of the control unit may be provided by the above-explained mobile device acting as a remote control.

Certain embodiments of the system further comprise at least one uninterruptible power supply (UPS). This way, it is ensured that the system does not shut down in an uncontrolled manner in case of a power outage. Moreover, this makes the system, in particular the projection means, resistant against voltage peaks.

### 4. Short description of the drawings

In the following detailed description, presently preferred embodiments of the invention are further described with reference to the following figures:
- Fig. 1:: A schematic overview of an interactive rear-projection system, a projection screen and a user in accordance with an embodiment of the invention;
- Figs. 2a,b:: Block diagrams illustrating components of an interactive rear-projection system in accordance with an embodiment of the invention;
- Fig. 3:: Schematic illustrations of an interactive rear-projection system in accordance with an embodiment of the invention as seen from the outside;
- Fig. 4:: A block diagram illustrating hardware components of an interactive rear-projection system in accordance with an embodiment of the invention;
- Fig. 5:: A block diagram illustrating software components of an interactive rear-projection system in accordance with an embodiment of the invention;

### 5. Detailed description of preferred embodiments

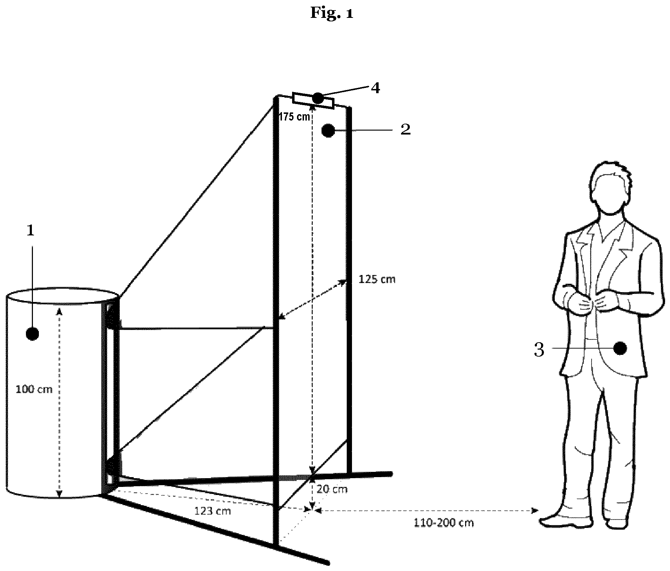

In the following, a presently preferred embodiment of the invention is described with respect to an interactive rear-projection system 1 as schematically shown in Fig. 1. As can be seen, the system 1 is in this embodiment a self-contained box which hosts the components described in more detail further below. Using two or more projectors (not directly shown in Fig. 1, but indicated by means of the light beams transmitted by the system 1) images can be projected onto a transparent surface 2 (such as a shopping window, other glass surface, or Plexiglas surface) to which a conventional rear-projection foil is attached. This way, a user 3 can view and interact with the images projected onto the display area 2.

### Hardware composition of the system 1

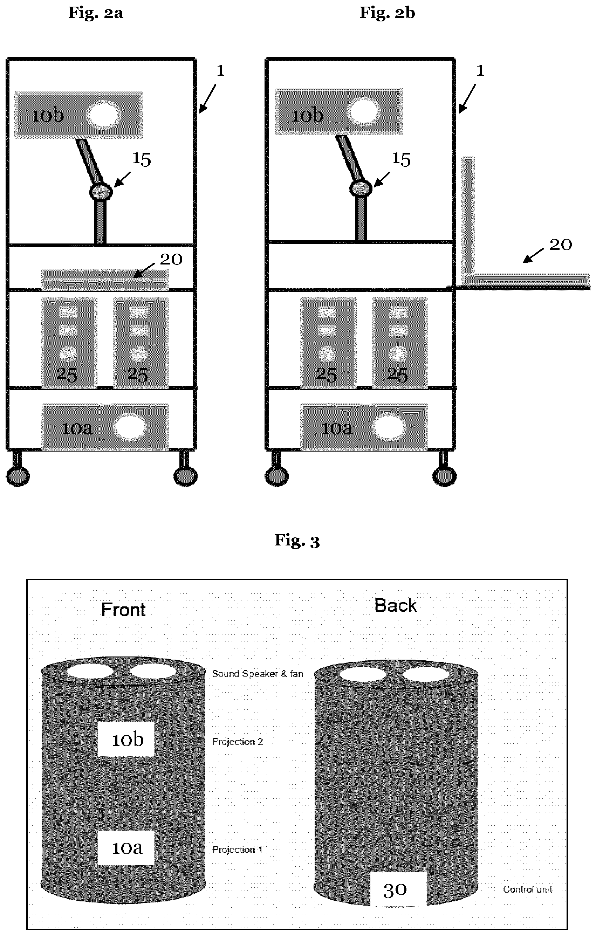

Figs. 2a and 2b illustrate the internal components of an interactive rear-projection system in accordance with an embodiment of the invention. In this embodiment, the system 1 comprises an aluminum rack (although any other suitable material may be used) and a cable route for a clean composition of the different components. The cable route is installed along the rack. Figs. 2a and 2b also illustrate the two projectors 10a and 10b, the composition of which (one at the bottom and the other at the top of the rack) will provide the maximum flexibility regarding the projection size. In addition to the software-based projection adjustment functionality described further below, the second projector 10b is mounted on an optional flexible holding 15, which provides the flexibility for manual adjustments.

A laptop computer 20 (note that also any other information processing system 20, such as a tablet computer, conventional mini PC, or the like could be used) is positioned in the center of the rack on a drawer in order to provide the most comfortable standing position for maintenance purposes. Fig. 2a shows the computer 20 in the stowed-away state, and Fig. 2b shows the computer 20 being drawn out of the housing of the system 1. The laptop 20 is preferably equipped with wireless capabilities such as WiFi and/or 3G for quick internet access.

Under normal circumstances the system 1 and all internal components are provided with electricity by an external source. The system 1 comes with a commercially available power connector. Optionally, one or more UPS units 25 are in charge of electricity delivery for the projectors 10a and 10b in case of an outage as well as for voltage stabilization. In a situation of power outage, the switch to the internal power supply 25 is performed without interrupting the operation of the system 1 and the projection means 10a and 10b are switched off in a controlled manner by help of the projection means health monitoring adapter 12.

As can be seen in Figs. 2a and 2b, the internal components of the system 1 are arranged in a manner that is as space saving as possible with off-the-shelf components, which also makes the system particularly transportable.

Despite the space-saving arrangement, the suggested system 1 at the same time makes sure that the distance of the projectors 10a, 10b to the projection area 2 is as small as possible while ensuring the maximum projection size especially in the vertical extent. The required distance between the projectors is limited by physical characteristics of rear-projection foils which require an angle of impact of the light of at least 40° in order to limit the impact on the brightness due to reflection. If the two projectors are arranged in a vertical offset of approximately 70 cm to each other so that the box has a height of approximately 100 cm, and the distance to the projection screen is between 120 and 130 cm, it is possible to generate a projection height of 160 cm to 180 cm, which is suitable to show life-size representations of human beings.

Fig. 3 illustrates an interactive rear-projection system 1 in accordance with an embodiment of the invention as seen from the outside. Accordingly, the supporting rack is hidden under a cover which hides all non-user relevant components and provides the use case-relevant features to the user. As can be seen in the front view illustrated in the left hand part of Fig. 3, the cover comprises a projection hole for each projector 10a, 10b. At the top of the cover one or more speakers and one or more fans are installed. The one or more fans are in charge of temperature adjustment for the system 1 in a closed state and are equipped with a temperature sensor. This way, a self-cooling system 1 is provided which together with the optional emergency power supply (see above) results in a completely autonomic system which reliably avoids unexpected hardware issues and/or data loss in case of power losses.

The back view illustrated in the right hand part of Fig. 3 illustrates a control unit 30 which preferably provides the following adjustment means:power button, sound adjustment, control and power LED(s). The control unit 30 may furthermore provide plug-and-play support for third-party devices (e.g. external USB, external audio).

The cover of the present system 1 is preferably made from wood material. In certain embodiments, the cover is white and can be configured according to the corporate design of the customer.

### Hardware components overview

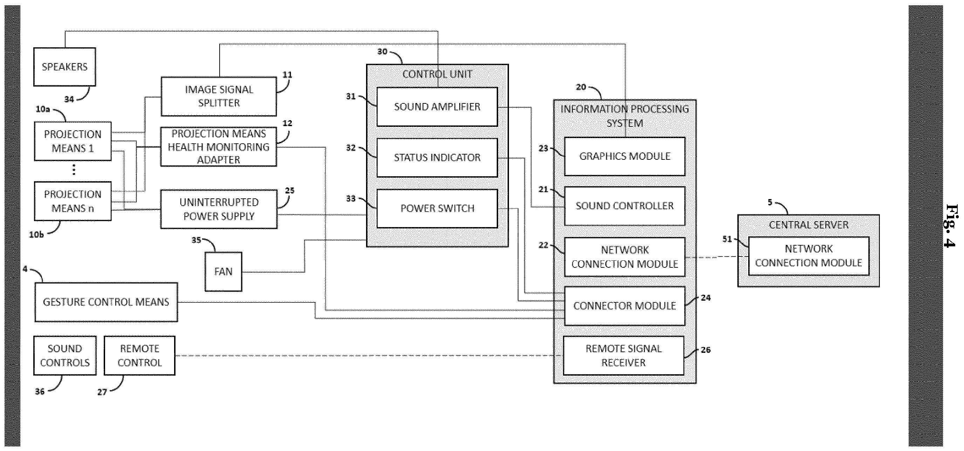

Fig. 4 illustrates hardware components of an interactive rear-projection system in accordance with an embodiment of the invention. It shows the hardware components of the system 1 including their connections as described below. It will be appreciated that the present invention is directed to embodiments comprising all, or only a subset of the following components.
Gesture control means (4): detects gestures of the user (3) and forwards this information to the connector module (24)
Speakers (34): outputs the application sound to the user (3)
Sound controls (36): allows service personnel to adjust volume and tone to be played via the speakers (34)
Remote control (27): allows power, sound and status control as well as configuration and application flow control within near distance (up to 100) of the information processing system (20)
Projection means (10a, 10b): projects a part of the composite image to the transparent surface (2) with minimal keystone image correction
Image signal splitter (11): splits an overall image into partial images without overlaps and sends these to the projection means (10a, 10b)
Projection means health monitoring adapter (12): monitors the status of the projection means (10a, 10b) including components with limited lifetime like lamps and allows a controlled shutdown of the projection means (10a, 10b)
UPS (25): stabilizes the output voltage and stores energy to supply components with power after a power outage

### Control unit 30

Control unit (30): combines means to control power, sound and cooling as well as status feedback. It comprises the following parts:
Sound amplifier (31): amplifies the sound signal from the sound controller (21) and plays it through the speakers (34)
Status indicator (32): indicates the overall status of the system (1)
Power switch (33): allows waking up the system (1) from standby or sends it to standby
Fan (35): cools the system (1) based on the current temperature measured by an integrated temperature sensor

### Information processing system 20

Information processing system (20): processes detected gestures, executes the application and controls the communication to the central server (5). It comprises the following parts:
   Sound controller (21): processes application and notification sounds and forwards them to the sound amplifier (31)
   Network connection module (22): coordinates bidirectional communication with the central server (5) using wireless or wired network protocols
   Graphics module (23): processes application and notification visuals and forwards them as one image to the image signal splitter (11)
   Connector module (24): adapts components like switches and indicators and the gesture control means (4) to the information processing system (20)
   Remote signal receiver (26): receives signals from the remote control (27) to be processed from the information processing system (20)

### Central server 5

Central server (5): provides a centralized access to the system (1) or to multiple systems (1) via SDCUDAS (900)
Network connection module (51): coordinates bidirectional communication with the information processing system (20) using wireless or wired network protocols

### Software architecture overview

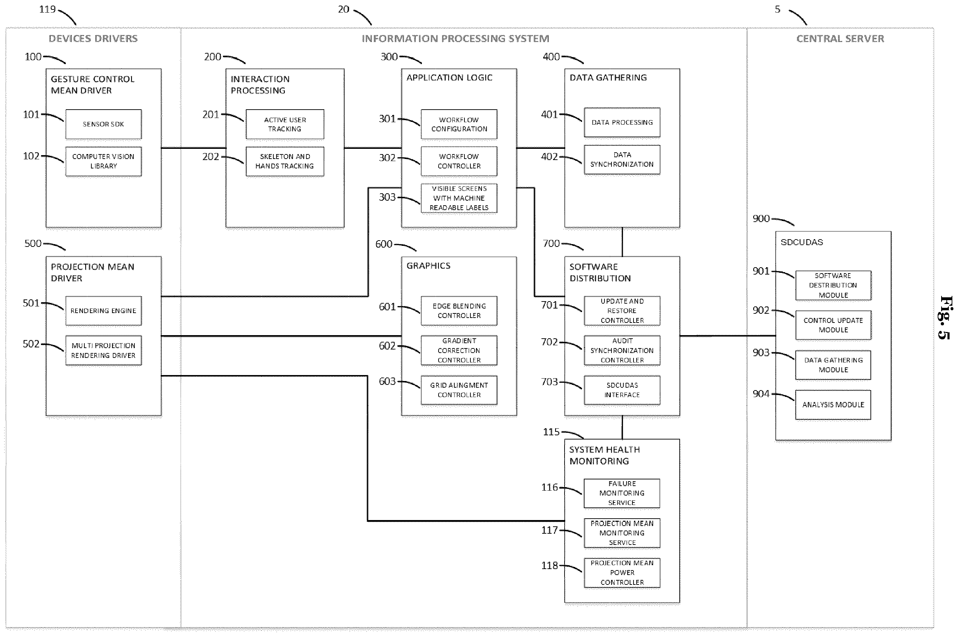

Fig. 5 illustrates software components of an interactive rear-projection system in accordance with an embodiment of the invention. It shows the software components of the system 1 including their connections. Additionally, Fig. 5 underlines the component-based application architecture and the resulting extension capabilities. It will be appreciated that the present invention is directed to embodiments comprising all, or only a subset of the following components.

As can be seen in the left-most section of Fig. 5, the user interface of this embodiment of the system 1 is formed by two or more projectors 10a, 10b and a gesture control means 4, e.g. Kinect device of Microsoft, of the system 1. The gesture control means 4 further comprises a software driver, e.g. a Kinect driver provided by Microsoft. This way, the system 1 makes use of the gesture control capabilities as a human interface, e.g. those of Microsoft Kinect and its open source Kinect SDK in combination with Microsoft's.NET Framework and the XNA Framework.

In the following, the most important software components of embodiments of the system 1 illustrated in the middle section of Fig. 5 will be explained. It will be appreciated that embodiments of the invention may comprise any combination or sub-combination of these components.

### Device drivers 119

Device drivers (119): operates and controls projection means (10a, 10b) and gesture control means (4). This comprises the following parts:
   Gesture control mean driver (100): represents a programmatic interface for monitoring and operating of gesture control mean.
   Sensor sdk (101): provides access to the gesture control mean functions. The functions return the status of the device sensors, automatically adjust the angle of the sensor, increase the accuracy in detection and focusing on one particular user, transfer the environment data: high frequency color frame-by-frame picture flow, high frequency depth frame-by-frame picture flow, skeleton depiction of user.
   Computer vision library (102): performs processing of images in color to detect motion in the visual material and to filter unnecessary gestures
   Projection mean driver (500): provides a programmatic interface to functions of the projection means (10a, 10b)
   Rendering engine (501): generates the picture shown on the screen to the user utilizing functions of the projection means (10a, 10b)
   Multi projection rendering driver (502): automatically adjusts and synchronizes the picture output by multiple projection means. It allows to avoid the effect of doubled light intensity in the overlapping areas of several different light streams from different sources (projectors) - a custom gradient is calculated and deployed.

### Information processing system 20

Information processing system (20): processes detected gestures, executes the application and controls the communication to the central server (5). This comprises the following parts:
   System health monitoring (115): monitors internal events which happen during operation of the information processing system (20) and device drivers (119)
   Failure monitoring service (116): monitors errors of the information processing system (20) and mitigates results of system failure
   Projection mean monitoring service (117): monitors the status of the projection means (10a, 10b) allowing fast reaction on breakdown of hardware
   Projection mean power controller (118): automatically controls the power supply of the projection means (10a, 10b) preventing them from being damaged
   Interaction processing (200): processes visual and other material tracked by the gesture control means (4)
   Active user tracking (201): automatically finds and focuses on an active user (3). The component is used to interact with the chosen user (3) in order to guide her/him into the optimal spot in front of the VIP. This approach increases the accuracy of the whole system and enables better recognition of user's gestures and user's skeleton.

Skeleton and hands tracking (202): detects the active hand of the user, with which the user (3) interacts with the system (1). It identifies the status of the user's hand, e.g. if the user clenches her/his fist. It adaptively calculates the coordinates for the user hand. If needed, it predicts the next immediate position of the user hand, so that the system (1) does not lose the user's hand and the navigation flow stays smooth.
Application logic (300): defines the interaction process and provides a basis for the system feedback on the actions of the user
Workflow configuration (301): defines the logic of the system interactions and a set of all possible states of the system (1), including a set of all possible states of the system (1) visual representation
Workflow controller (302): defines a set of events and interactions based on the current stage of workflow and consumer actions
Visible screens with machine readable labels (303): generates media content and visualizes the current state of the workflow
Data gathering (400): processes and gathers data received during interactions
Data processing (401): receives the data from the workflow controller and saves it into an internal data storage
Data synchronization (402): prepares gathered consumer interaction data for transferring to SDCUDAS (900)
Graphics (600): module intended to perform the configuration of the picture shown by projection means (10a, 10b)
Engine blending controller (601): calibrates the projection means 10a, 10b)
Gradient correction controller (602): sets the gradient for the picture. The gradient is applied on the appropriate parts of the visible screens and the final visuals are transferred to the particular projectors through the rendering engine (501)
Grid alignment controller (603): displays a grid on each projection mean (10) which allows service personnel to adjust one or more flexible holding means (15) in an efficient manner in order to achieve a seamless composite image.
Software distribution (700): checks for updates of the information processing system (20) and automatically preforms a rollback and rerun of the application in case of system failure
Update and restore controller (701): checks for the presence of updates of the information processing system (20), runs the system update and restoration when necessary.
Audit synchronization controller (702): tracks system errors and logs them. When a secured connection to the SDCUDAS (900) is available, then this data will be synchronized with SDCUDAS (900) through the SDCUDAS interface (703).
SDCUDAS interface (703): establishes a secured connection to SDCUDAS (900)

### Central server 5

Central server (5): provides a centralized access to the system (1) or multiple systems (1) via SDCUDAS (900).
SDCUDAS (900): Software-Distribution/Control/Update/Data Gathering and Analysis System. This comprises the following parts:
   Software distribution module (901): establishes a connection with the information processing system (20) allowing to send updates of the application
   Control update module (902): notifies the information processing system (20) that updates are available
   Data gathering module (903): gathers and processes data coming from the information processing system (20). The data is stored in the SDCUDAS database.
Analysis module (904): provides advanced analytics of gathered consumer data, such as user behaviour and preferences, to retrieve a basis of consumer segmentation.

### Summary and exemplary use cases

As explained herein, the present invention provides a system 1 which consolidates hardware components to achieve an all-in-one solution for gesture-controlled rear-projection. The system 1 (preferably provided in the form of a "box") is designed in the most space-saving and transportable way. The design also makes sure that the greatest possible portrait-oriented projection-area is accomplished while keeping the distance between the "box" and the projection screen at a minimum. The individual hardware components perfectly harmonize with each other through the software components disclosed herein.

In preferred embodiments, the system 1 comprises a space-saving box for optimal component composition. The consolidated hardware is supported by various software components. The "box" is developed in a way that hardware and software components are perfectly balanced and match each other. The system 1 uses rear-projection technology and image processing for edge-blending for two or more projectors to create a real-life size, portrait picture. The image processing module can be used with nearly all kinds of conventional projectors. The main application is projected on a special rear-projection foil and is controlled via gesture control using a gesture detection device like Microsoft's Kinect. The main application concept is use case dependent (see below) and easily changeable and/or extendable via interfaces. The invention also provides a maintenance feature for remote support, monitoring, incident management and/or deployment purposes. Therefore status information is sent to a central server which provides a unified access for all kinds of control, maintenance, update or configuration of all globally distributed devices. Furthermore, the central server provides possibilities to analyse and process statistical data retrieved from the devices in a business intelligence application.

The presentation of a life-size virtual promoter belongs to the strengths of the invention, as well as the ability to provide information of different kinds to its surrounded environment.

As one example, the system can act as a virtual product information system (PIM), which can provide marketing, training and/or business related information to prospects of different variety. It also can be placed in receptions or entry halls to communicate with potential visitors.

In case of a projection area using a transparent foil, the system creates a holographic effect. This approach considerably enriches the user experience, when e.g. used in connection with a shopping window. Further, the invention may be used for window shopping purposes together with available buying extensions (e.g. mobile and/or QR codes capabilities) which will enable a customer to conduct legally binding buying processes via the shopping window. Without this extension, it can still be used to increase the customer engagement and visitor/buyer frequency of the shop by simply placing it into the shopping window and attracting potential customers or passers-by. Compared to a traditional electronic system such as touch screens or TVs, the invention can has various technical advantages such as place-saving metrics, hygienic use and/or cost-saving production and maintenance.

One of the core characteristics of the system of the invention is its component-based system architecture for both hardware and software. It gives the invention the ability for serving a wide range of different use cases. The content can be easily changed and customized with the delivered software.

## Claims

1. A gesture-controlled rear-projection system (1), comprising:
a. two projection means (10a, 10b), each adapted for projecting an image onto a rear-projection foil attached to a transparent surface (2);
b. an image processing module for adjusting the images projected by each of the two projection means (10a, 10b) to create a composite image;
c. gesture control means (4) for enabling one or more users (3) to interact with the composite image using one or more gestures;
**characterized in that:**
d. the two projection means 10a, 10b) are arranged in a vertical arrangement to provide a composite image in portrait format;
e. wherein the system comprises a rack, wherein the first projection means is arranged at the top of the rack the second projection means is arranged at the bottom of the rack and at least one additional component is arranged between the first and second projection means.

2. The system (1) of claim 1, wherein the images projected by the two projection means (10a, 10b) overlap, and wherein the image processing module is adapted for creating a transparent-to-black gradient in the overlapping portions of the images, so that the images can be blended over each other to create the composite image.

3. The system (1) of the preceding claim, further comprising means to visually adjust the size, brightness and/or color of the gradients of the images to improve the appearance of the composite image.

4. The system (1) of any of the preceding claims, further comprising at least one holding means (15) for flexibly holding at least one of the two projection means (10a, 10b) to allow adjusting the projecting direction of the projecting means and/or the dimensions of the composite image.

5. The system (1) of the preceding claim, further comprising a projector alignment module to support positioning and/or orientation of the projection means (10a, 10b) held by the holding means (15).

6. The system (1) of any of the preceding claims, further comprising a system health monitoring module (115) adapted for monitoring and/or logging the status of the system (1) and/or its components and for sending status information to a server (5).

7. The system (1) of any of the preceding claims, further comprising an information processing system (20), such as a laptop computer, for executing an application to be presented to the one or more users (3).

8. The system (1) of any of the preceding claims, wherein at least one dynamically created machine-readable label is displayed on the composite image which is usable to hand over an interaction process to a mobile device.

9. The system (1) of the preceding claims 7 and 8, wherein the at least
one machine-readable label is a Quick Response, QR, code and wherein the application allows the one or more users (3) to perform window shopping.

10. The system (1) of any of the preceding claims, further comprising a network interface for allowing administration of the system (1) from a remote location, such as a server, and/or from a mobile device, such as a mobile phone and/or tablet computer and/or remote control.

11. The system (1) of any of the preceding claims, further comprising a control unit (30) for displaying the status of the system (1) and for selecting a power state and/or sound setting of the system (1).

12. The system (1) of any of the preceding claims, further comprising at least one uninterruptible power supply, UPS (25) to compensate voltage peaks and to allow a controlled shutdown in case of power outages.

## Patentansprüche

1. Ein gestengesteuertes Rückprojektionssystem (1), umfassend:
a. zwei Projektionsmittel (10a, 10b), jeweils angepasst zum Projizieren eines Bildes auf eine Rückprojektionsfolie, welche an einer transparenten Oberfläche (2) angeordnet ist;
b. ein Bildverarbeitungsmodul zum Einstellen der Bilder, die von jedem der zwei Projektionsmittel (10a, 10b) projiziert werden, zum Erzeugen eines zusammengesetzten Bildes;
c. Gestensteuerungsmittel (4), welche es einem oder mehreren Benutzern (3) erlauben, mit dem zusammengesetzten Bild unter Verwendung von einer oder mehreren Gesten zu interagieren;
**dadurch gekennzeichnet, dass:**
d. die zwei Projektionsmittel (10a, 10b) in einer vertikalen Anordnung angeordnet sind, um ein zusammengesetztes Bild im Hochformat bereitzustellen;
e. wobei das System einen Träger umfasst, wobei das erste Projektionsmittel oben am Träger angeordnet ist, das zweite Projektionsmittel unten am Träger angeordnet ist und zumindest eine zusätzliche Komponente zwischen dem ersten und dem zweiten Projektionsmittel angeordnet ist.

2. Das System (1) nach Anspruch 1, wobei die von den zwei Projektionsmitteln (10a, 10b) projizierten Bilder sich überlappen und wobei das Bildverarbeitungsmodul angepasst ist zum Erzeugen eines Transparent-zu-Schwarz-Gradients im Überlappungsbereich der Bilder, sodass die Bilder übereinander geblendet werden können, um das zusammengesetzte Bild zu erzeugen.

3. Das System (1) nach dem vorstehenden Anspruch, ferner umfassend: Mittel zum visuellen Einstellen der Größe, Helligkeit und/oder Farbe der Gradienten der Bilder zum Verbessern des Aussehens des zusammengesetzten Bildes.

4. Das System (1) nach irgendeinem der vorstehenden Ansprüche, ferner umfassend: zumindest ein Haltemittel (15) zum flexiblen Halten zumindest eines der zwei Projektionsmittel (10a, 10b), um ein Einstellen der Projektionsrichtung des Projektionsmittels und/oder der Dimensionen des zusammengesetzten Bildes zu erlauben.

5. Das System (1) nach dem vorstehenden Anspruch, ferner umfassend: ein Projektorausrichtungsmodul zum Unterstützen einer Positionierung und/oder Orientierung des Projektionsmittels (10a, 10b), das von dem Haltemittel (15) gehalten wird.

6. Das System (1) nach irgendeinem der vorstehenden Ansprüche, ferner umfassend: ein Systembetriebszustandsüberwachungsmodul (115), angepasst zum Überwachen und/oder Loggen des Status des Systems (1) und/oder seiner Komponenten und zum Senden von Statusinformationen an einen Server (5).

7. Das System (1) nach irgendeinem der vorstehenden Ansprüche, ferner umfassend: ein Informationsverarbeitungssystem (20), wie beispielsweise ein Laptopcomputer, zum Ausführen einer Anwendung, die dem einen oder den mehreren Benutzern (3) angezeigt werden soll.

8. Das System (1) nach irgendeinem der vorstehenden Ansprüche, wobei zumindest eine dynamisch erzeugte maschinenlesbare Kennzeichnung auf dem zusammengesetzten Bild angezeigt wird, welches verwendbar ist zum Übergeben eines Interaktionsprozesses an eine mobile Vorrichtung.

9. Das System (1) nach den vorstehenden Ansprüchen 7 und 8, wobei die zumindest eine maschinenlesbare Kennzeichnung ein Quick Response, QR, Code ist und wobei die Anwendung es dem einen oder den mehreren Benutzern (3) erlaubt, einen Schaufensterbummel durchzuführen.

10. Das System (1) nach irgendeinem der vorstehenden Ansprüche, ferner umfassend: eine Netzwerkschnittstelle zum Ermöglichen einer Administration des Systems (1) von einem entfernten Ort aus, wie beispielsweise einem Server, und/oder von einer mobilen Vorrichtung aus, wie beispielsweise einem Mobiltelefon und/oder einem Tablet-Computer und/oder einer Fernbedienung.

11. Das System (1) nach irgendeinem der vorstehenden Ansprüche, ferner umfassend: eine Steuereinheit (30) zum Anzeigen des Status des Systems (1) und zum Auswählen eines Betriebszustands und/oder einer Toneinstellung des Systems (1).

12. Das System (1) nach irgendeinem der vorstehenden Ansprüche, ferner umfassend: zumindest eine ununterbrechbare Energieversorgung, UPS (25) zum Kompensieren von Spannungsspitzen und zum Ermöglichen eines kontrollierten Herunterfahrens im Falle von Stromausfällen.

## Revendications

1. Système de rétroprojection à commande gestuelle (1) comprenant :
a. deux moyens de projection (10a, 10b), chacun adapté pour projeter une image sur une feuille de rétroprojection fixée sur une surface transparente (2) ;
b. un module de traitement d'image pour ajuster les images projetées par chacun des deux moyens de projection (10a, 10b) pour créer une image composite ;
c. des moyens de commande gestuelle (4) pour permettre à un ou plusieurs utilisateurs (3) d'interagir avec l'image composite en utilisant un ou plusieurs gestes ;
**caractérisé en ce que** :
d. les deux moyens de projection (10a, 10b) sont agencés en un agencement vertical pour fournir une image composite en format portait ;
e. le système comprenant une baie, le premier moyen de projection étant agencé en haut de la baie, le deuxième moyen de projection étant agencé en bas de la baie et au moins un composant additionnel étant agencé entre les premier et deuxième moyens de projection.

2. Système (1) selon la revendication 1, dans lequel les images projetées par les deux moyens de projection (10a, 10b) se chevauchent, et dans lequel le module de traitement d'image est apte à créer un gradient transparent-vers-noir dans les parties de chevauchement des images, de manière que les images puissent être mélangées l'une sur l'autre pour créer l'image composite.

3. Système (1) selon la revendication précédente, comprenant en outre des moyens pour ajuster visuellement la taille, la luminosité et/ou la couleur des gradients des images pour améliorer l'apparence de l'image composite.

4. Système (1) selon l'une quelconque des revendications précédentes, comprenant en outre au moins un moyen de support (15) pour supporter de manière flexible au moins l'un des deux moyens de projection (10a, 10b) pour permettre un ajustement de la direction de projection des moyens de projection et/ou des dimensions de l'image composite.

5. Système (1) selon la revendication précédente, comprenant en outre un module d'alignement de projection pour supporter le positionnement et/ou l'orientation des moyens de projection (10a, 10b) maintenus par le moyen de support (15).

6. Système (1) selon l'une quelconque des revendications précédentes, comprenant en outre un module de surveillance de l'état de santé du système (115), apte à surveiller et/ou enregistrer l'état du système (1) et/ou de ses composants et pour transmettre des informations d'état à un serveur (5).

7. Système (1) selon l'une quelconque des revendications précédentes, comprenant en outre un système de traitement d'informations (20), tel qu'un ordinateur portable, pour exécuter une application à présenter aux un ou plusieurs utilisateurs (3).

8. Système (1) selon l'une quelconque des revendications précédentes, dans lequel au moins une étiquette lisible par machine créée dynamiquement est affichée sur l'image composite, laquelle est utilisable pour transférer à un dispositif mobile un processus d'interaction.

9. Système (1) selon les revendications précédentes 7 et 8, dans lequel la au moins une étiquette lisible par machine est un code de réponse rapide, QR, et dans lequel l'application permet aux un ou plusieurs utilisateurs (3) d'effectuer du lèche-vitrines.

10. Système (1) selon l'une quelconque des revendications précédentes, comprenant en outre une interface réseau pour permettre une administration du système (1) à partir d'un emplacement éloigné, tel qu'un serveur, et/ou à partir d'un dispositif mobile, tel qu'un téléphone mobile et/ou un ordinateur tablette et/ou une télécommande.

11. Système (1) selon l'une quelconque des revendications précédentes, comprenant en outre une unité de commande (30) pour afficher l'état du système (1) et pour sélectionner un état d'alimentation et/ou un réglage du son du système (1).

12. Système (1) selon l'une quelconque des revendications précédentes, comprenant en outre au moins une alimentation de puissance sans coupure, UPS, (25) pour compenser les pics de tension et pour permettre une extinction contrôlée en cas de pannes d'alimentation.
